# EUROPEAN PATENT APPLICATION

(11) **EP 3 462 578 A1**
(43) Date of publication of application: **03.04.2019**
(21) Application number: 18197152.4
(22) Date of filing: 27.09.2018
(51) Int. Cl.: H02K 1/27, H02K 21/24, H02K 1/18, H02K 3/47

(54) **MODULAR POWER GENERATION DEVICE**

(30) Priority: 29.09.2017 TW 10633624
(71) Applicant: Suman Corporation, 807 Kaohsiung City (TW)
(72) Inventor: LIN, Tseng-Cheng, 807 Kaohsiung City (TW); LIN, Hsiang-Hua, 807 Kaohsiung City (TW)
(74) Representative: Viering, Jentschura & Partner mbB Patent- und Rechtsanwälte

(57) **Abstract**

A modular power generation device (100) includes a plurality of modules (10) arranged along an axial direction (L). The modules (10) each include a stator (1) and a rotor (2). The stator (1) includes at least one housing member (11) and a plurality of coils (12). The housing member (11) defines a rotation space (113) therein. The rotor (2) includes at least one disc (21) and a plurality of magnetic members (22). The disc (21) includes a shaft joint portion (211) and a magnetic member mounting portion (212). The magnetic members (22) are spaced apart from each other and disposed in the magnetic member mounting portion (212).

## Description

### FIELD OF THE INVENTION

The present invention relates to a modular energy conversion device, and more particularly to a modular power generation device.

### BACKGROUND OF THE INVENTION

Generators and motors (or electrical machines) are commonly used energy conversion devices. The principle of a generator is similar to that of a motor. The difference between the two is that the direction of energy conversion is different. The generator may use various powers (such as hydraulic power, wind power, etc.) to make the rotor rotate relative to the stator. Through the change of the magnetic field, the coil generates an induced current due to the electromagnetic induction effect; or, after generating electricity (for example, using solar energy) to generate DC power, the DC motor is started to drive the generator to generate electricity. An external power source supplies power to the motor to energize the rotor or the coil of the stator, such that the rotor can be rotated relative to the stator due to the magnetic interaction.

Taiwan Patent Early Publication No. 201715823 discloses a "Large Rated Power Dynamo", which comprises an upper end cover, a lower end cover, and a plurality of rotor assemblies stacked between the upper end cover and the lower end cover. A stator assembly is provided between every adjacent two of the rotor assemblies. Between the upper end cover and the rotator assembly adjacent to the upper end cover is also provided with a stator assembly. Between the lower end cover and the rotator assembly adjacent to the lower end cover is also provided with a stator assembly.

Taiwan Patent Publication No. 1274460 discloses a "tandem motor accelerator", which mainly includes two motors connected in series and disposed in a casing assembly, an outer annular gear, a planetary arm, and a planetary gear set disposed in the planetary arm. A sun gear is disposed in the planetary arm. An output shaft is disposed in the sun gear. The sun gear meshes with the planetary gear. The two motors respectively drive the planetary arm and the annular gear of the planetary gear set, and then output their rotational power through the output shaft of the sun gear.

However, how to make the generator adjust the quantity and the configuration according to different output requirements to enhance the flexibility of product use and improve the working efficiency of the product is still a subject of research and development.

### SUMMARY OF THE INVENTION

The object of the invention is achieved by the subject-matter of the independent claim. Advantageous embodiments are disclosed by the dependent claims.

In order to improve the flexibility and working efficiency of product use, a modular generation device according to one example of the present invention is provided. The modular generation device comprises a plurality of modules arranged along an axial direction. The modules each comprise a stator and a rotor. The stator comprises at least one housing member and a plurality of coils. The housing member includes a pair of side walls and a connecting wall. The connecting wall is connected to the pair of side walls. A rotation space is defined between the pair of side walls and the connecting wall. The pair of side walls are provided with the coils, respectively. The rotor includes at least one disc and a plurality of magnetic members. The disc includes a shaft joint portion and a magnetic member mounting portion. The magnetic member mounting portion surrounds the shaft joint portion and corresponds to the pair of side walls. When the rotor is rotated, the coils of the stator generate electric power.

For example, the magnetic member mounting portion is provided with a plurality of spaced mounting grooves for mounting the magnetic members respectively.

For example, the mounting grooves and the magnetic members each have an arc shape.

For example, the shaft joint portion has a shaft hole for connecting a rotating shaft member. The rotating shaft member includes at least one shaft. The shaft is inserted into the shaft hole of the shaft joint portion. Alternatively, the rotating shaft member includes a plurality of shafts. Every adjacent two of the shafts are connected in series by a coupling.

For example, the shaft joint portion has a plurality of engaging portions adjacent to the shaft hole for engaging the shaft.

For example, the shaft joint portion has at least one screw hole communicating with the shaft hole. The screw hole is locked by a screw to tighten the shaft.

For example, the rotor includes a plurality of discs that are spaced apart from each other.

For example, the modules each further includes a fixing seat for the stator to be fixedly mounted. The modules are arranged side by side and abut against each other through the fixing seat.

For example, the second circulation opening is plural and spaced apparat from each other and arranged around the shaft joint portion.

According to the above technical features, the present invention can preferably achieve following effects:
1. The stator and the rotor have the first circulation opening and the second circulation opening that extend axially and communicate with each other. On the one hand, the weight of the rotor can be reduced so that the rotor can be driven easily, and on the other hand, air can flow among the first circulation opening, and the second circulation opening and the rotation space for heat dissipation to improve the working efficiency.
2. Each module is modularized with independent functions, which is convenient to adjust the quantity and the configuration according to different power consumption or different output requirements to enhance the flexibility of product use.
3. The housing member includes a pair of side walls. Each of the side walls is provided with the coils, which is beneficial for increasing the amount of power generated.
4. The modules can be driven by the same shaft or a plurality of shafts that are connected in series by the coupling.
5. The shaft joint portion is provided with the screw and the engaging portions, so that the shaft can form an exact interlocking relationship with the shaft joint portion.

### BRIEF DESCRIPTION OF THE DRAWINGS

FIG. 1 is a perspective view in accordance with a first embodiment of the present invention;
FIG. 2 is an exploded view in accordance with the first embodiment of the present invention;
FIG. 3 is a sectional view in accordance with the first embodiment of the present invention;
FIG. 4 is a planar view in accordance with a second embodiment of the present invention; and
FIG. 5 is a perspective view of the rotor in accordance with a third embodiment of the present invention.

### DETAILED DESCRIPTION OF THE PREFERRED EMBODIMENTS

In combination with the above technical features, the main functions of the modular power generation device of the present invention will now be clearly shown in the following embodiments, by way of example only, with reference to the accompanying drawings.

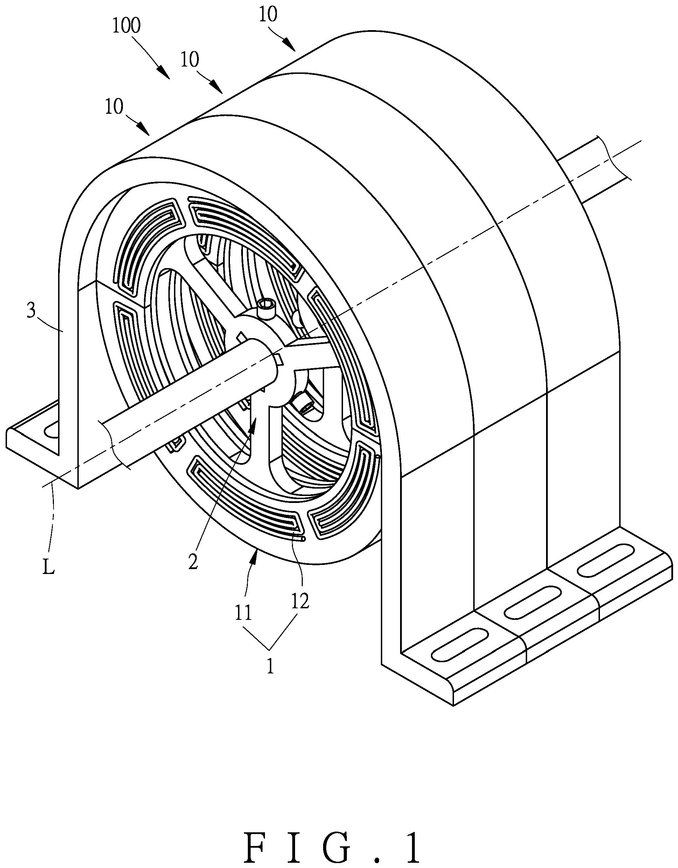

Referring to FIG. 1, a modular power generation (100) in accordance with a first embodiment of the present invention comprises a plurality of modules (10) arranged along an axial direction (L). Each module (10) comprises a stator (1) and a rotor (2). The stator (1) comprises a housing member (11) and a plurality of coils (12). In this embodiment, each module (10) further includes a fixing seat (3) for the stator (1) to be fixedly mounted by means of inlaying, welding, locking, or the like. The modules (10) are arranged side by side and abut against each other through the fixing seat (3).

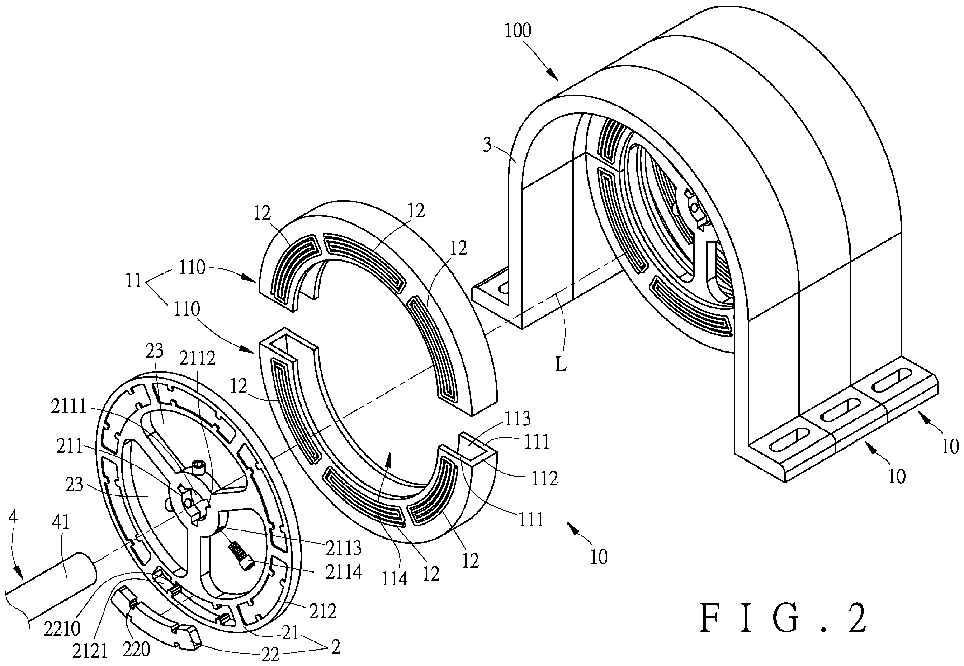

Referring to FIG. 2, in conjunction with FIG. 1, the housing member (11) may be integrally formed or may include a plurality of housings (110) that are connected to each other by means of inlaying, welding, locking, or the like. Each housing (110) includes a pair of side walls (111) and a connecting wall (112). The pair of side walls (111) are provided with the coils (12), respectively. The coils (12) may be, for example, printed circuits or circuit wiring coils formed by electroforming to reduce the occupied area, or the coils (12) may adopt enamelled coils. The coils (12) are collectively or respectively connected to a charging circuit, a power supply circuit or a power source, etc., and can be adjusted according to different requirements for charging, supplying power or inputting power. The connecting wall (112) is connected to the pair of side walls (111). A rotation space (113) is defined between the pair of side walls (111) and the connecting wall (112). The housing member (11) has a first circulation opening (114) communicating with the rotation space (113) and extending along the axial direction (L).

Referring to FIG. 2, in conjunction with FIG. 1, the rotor (2) comprises a disc (21) and a plurality of magnetic members (22). The disc (21) comprises a shaft joint portion (211) and a magnetic member mounting portion (212). The shaft joint portion (211) has a shaft hole (2111) for receiving a shaft (41) of a rotating shaft member (4). Preferably, the shaft joint portion (211) has a plurality of engaging portions (2112) adjacent to the shaft hole (2111) for engaging the shaft (41) (for example, a key and a key groove). Preferably, the shaft joint portion (211) has a plurality of screw holes (2113) communicating with the shaft hole (2111). Each screw hole (2113) is locked by a screw (2114) to further tighten the shaft (41).

Referring to FIG. 2, in conjunction with FIG. 1, the magnetic member mounting portion (212) surrounds the shaft joint portion (211) and corresponds to the pair of side walls (111). The disc (21) further has a plurality of second circulation openings (23) defined between the magnetic member mounting portion (212) and the shaft joint portion (211) and extending along the axial direction (L). In this embodiment, the second circulation openings (23) each have an arc shape and are spaced apart from each other and arranged around the shaft joint portion (211). The magnetic members (22) are spaced apart from each other and disposed in the magnetic member mounting portion (212). In detail, the magnetic member mounting portion (212) is provided with a plurality of spaced mounting grooves (2121) for mounting the magnetic members (22) by means of inlaying, bonding, or the like. In this embodiment, the mounting grooves (2121) and the magnetic members (22) each have an arc shape. The mounting grooves (2121) and the magnetic members (22) have matching features (2210) (220) for mating with each other. The mating features (2210) (220) may be, for example, ribs and grooves extending along the axial direction (L).

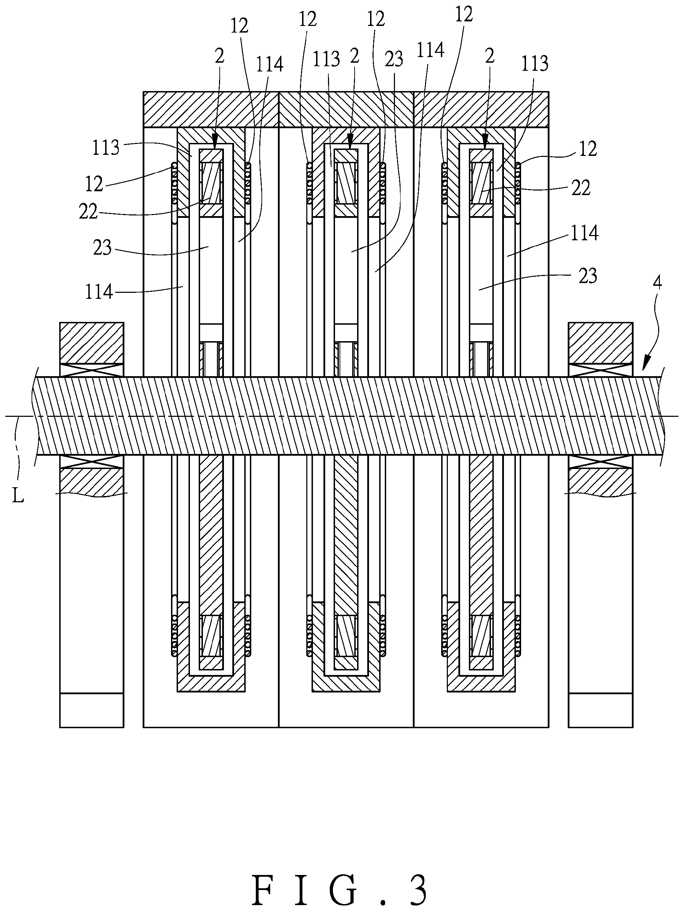

Referring to FIG. 3, when the rotating shaft member (4) is driven by an external power (such as hydraulic power, wind power, etc.) to rotate the rotor (2), the magnetic members (22) of the rotor (2) will enable the coils (12) of the stator (1) to generate electric power due to an electromagnetic induction effect, thereby functioning as a modular power generation device. Because the stator (1) and the rotor (2) have the first circulation opening (114) and the second circulation openings (23) extending along the axial direction (L) and communicating with each other, allowing air to flow among the first circulation opening (114), the second circulation openings (23) and the rotation space (113) for heat dissipation, the heat generated by the coils (12) can be dissipated by the flow of air to improve power generation efficiency.

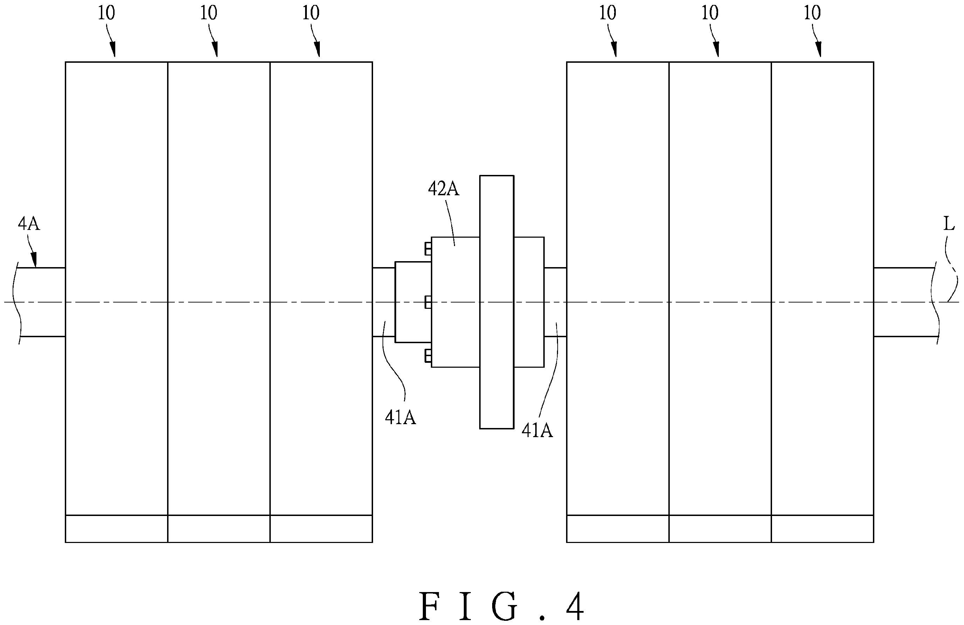

Referring to FIG. 4, a second embodiment of the present invention is substantially similar to the first embodiment, including a plurality of modules (10) arranged along an axial direction (L). The main difference is that the rotating shaft member (4A) includes a plurality of shafts (41A). Every adjacent two of the shafts (41A) are connected in series by a coupling (42A), thereby achieving the purpose of jointly interlinking the plurality of modules (10).

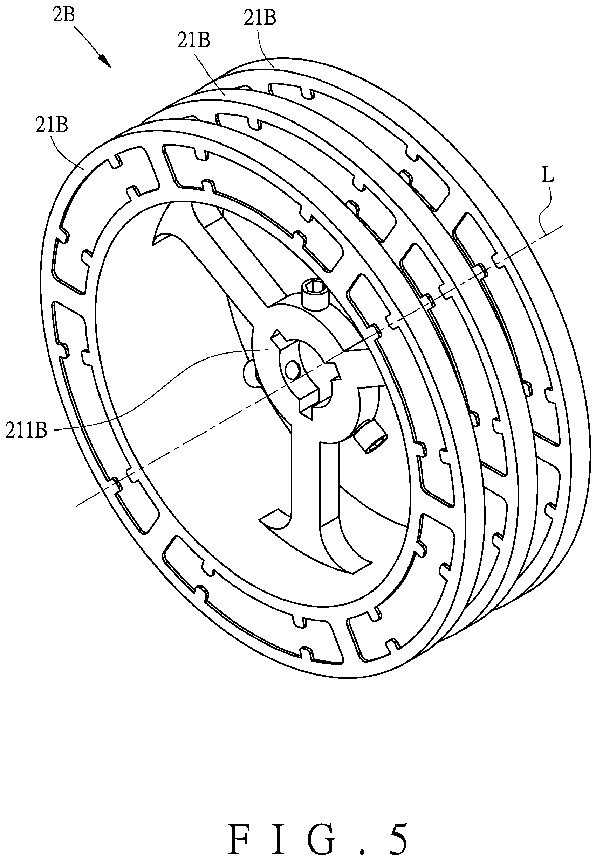

Referring to FIG. 5, a third embodiment of the present invention is substantially similar to the first embodiment. The main difference from the first embodiment is that the rotor (2B) may include a plurality of discs (21B) that are spaced apart from each other and arranged along the axial direction (L). The discs (21B) share the same shaft joint portion (211B); correspondingly, the stator may include a plurality of housings that are axially spaced.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A modular generation device (100), comprising:
a plurality of modules (10), arranged along an axial direction (L), the modules (10) each comprising a stator (1) and a rotor (2), the stator (1) comprising at least one housing member (11) and a plurality of coils (12), the rotor (2) including at least one disc (21) and a plurality of magnetic members (22), the disc (21) including a shaft joint portion (211) and a magnetic member mounting portion (212),
**characterized in**
**that** the housing member (11) includes a pair of side walls (111) and a connecting wall (112), the connecting wall (112) being connected to the pair of side walls (111), a rotation space (113) being defined between the pair of side walls (111) and the connecting wall (112), the pair of side walls (111) being provided with the coils (12) respectively; the magnetic member mounting portion (212) surrounding the shaft joint portion (211) and corresponding to the pair of side walls (111), the magnetic members (22) being spaced apart from each other and disposed in the magnetic member mounting portion (212); wherein when the rotor (2) is rotated, the coils (12) of the stator (1) generate electric power.

2. The modular generation device (100) as claimed in claim 1, wherein the magnetic member mounting portion (212) is provided with a plurality of spaced mounting grooves (2121) for mounting the magnetic members (22) respectively.

3. The modular generation device (100) as claimed in claim 2, wherein the mounting grooves (2121) and the magnetic members (22) each have an arc shape.

4. The modular generation device (100) as claimed in claim 1, wherein the shaft joint portion (211) has a shaft hole (2111), the modular generation device (100) further comprises a rotating shaft member (4), the rotating shaft member (4) includes at least one shaft (41), and the shaft (41) is inserted into the shaft hole (2111) of the shaft joint portion (211).

5. The modular generation device (100) as claimed in claim 4, wherein the rotating shaft member (4A) includes a plurality of shafts (41A), and every adjacent two of the shafts (41A) are connected in series by a coupling (42A).

6. The modular generation device (100) as claimed in claim 4, wherein the shaft joint portion (211) has a plurality of engaging portions (2112) adjacent to the shaft hole (2111) for engaging the shaft (41).

7. The modular generation device (100) as claimed in claim 4, wherein the shaft joint portion (211) has at least one screw hole (2113) communicating with the shaft hole (2111), and the screw hole (2113) is locked by a screw (2114) to tighten the shaft (41).

8. The modular generation device (100) as claimed in claim 1, wherein the rotor (2B) includes a plurality of discs (21B) that are spaced apart from each other.

9. The modular generation device as claimed in claim 1, wherein the modules (10) each further includes a fixing seat (3) for the stator (1) to be fixedly mounted, and the modules (10) are arranged side by side and abut against each other through the fixing seat (3).

10. The modular generation device (100) as claimed in claim 1, wherein the housing member (11) has a first circulation opening (114) communicating with the rotation space (113) and extending along the axial direction (L), the disc (21) further has a plurality of second circulation openings (23) defined between the magnetic member mounting portion (212) and the shaft joint portion (211) and extending along the axial direction (L), the second circulation openings (23) are spaced apparat from each other and arranged around the shaft joint portion (211), when the rotor (2) is rotated, air flows among the first circulation opening (114), the second circulation openings (23) and the rotation space (113) for heat dissipation.
